Europäisches Patentamt

**European Patent Office**

**Office européen des brevets**

(11) Publication number: **0 251 145 B1**

# EUROPEAN PATENT SPECIFICATION

(45) Date of publication of patent specification: **29.01.92** (51) Int. Cl.5: **B60C 15/06**

(21) Application number: **87108996.7**

(22) Date of filing: **23.06.87**

(54) **Heavy-duty pneumatic radial tire.**

(30) Priority: **24.06.86 JP 146020/86**

(43) Date of publication of application:
**07.01.88 Bulletin 88/01**

(45) Publication of the grant of the patent:
**29.01.92 Bulletin 92/05**

(84) Designated Contracting States:
**DE FR GB LU**

(56) References cited:
**EP-A- 0 148 782**
**DE-A- 2 611 482**
**FR-A- 2 385 546**
**US-A- 4 289 184**
**US-A- 4 513 123**

**PATENT ABSTRACTS OF JAPAN, vol. 7, no.
217 (M-245)[1362], 27th September 1983; &
JP-A-58 112 808 (YOKOHAMA GOMU K.K.)
05-07-1983**

(73) Proprietor: **THE YOKOHAMA RUBBER CO.,
LTD.**
**36-11, Shinbashi 5-chome Minato-ku
Tokyo, 105(JP)**

(72) Inventor: **Suzuki, Tatsuo**
**1009, Isshiki, Hayama-machi
Miura-gun Kanagawa-ken(JP)**

(74) Representative: **Weber, Dieter, Dr. et al
Dr. Dieter Weber und Dipl.-Phys. Klaus Seif-
fert Patentanwälte Gustav-Freytag-Strasse
25 Postfach 6145
W-6200 Wiesbaden 1(DE)**

**Description**

This invention relates to a pneumatic radial tire used for heavy-duty vehicles such as trucks and buses. More particularly, the present invention is concerned with an improved heavy-duty pneumatic radial tire having a carcass ply comprised of a metallic cord and at least two reinforcing layers provided at a portion where the carcass ply is turned up about a bead core.

Radial tires for heavy-duty vehicles, such as trucks and buses, use a metallic cord having high stiffness as a carcass ply cord. With respect to the carcass ply comprised of such a metallic cord, the end portion is turned up in a bead portion about a bead core from the inside of the bead portion towards the outside of the bead portion. A bead rubber filler is interposed between the turnup portion and the main body of the carcass ply. The above-mentioned tire structure tends to cause a stress concentration at the end of the turnup portion. The stress concentration leads to the occurrence of separation of a metallic cord from rubber, and the separation reaches the surface of the bead portion to cause a crack, thereby leading to a problem with the damage to the tire. In general, in order to prevent the occurrence of such a problem, at least two reinforcing layers are provided on the outside of the turnup portion.

When providing at least two reinforcing layers on the outside of the turnup portion as mentioned above, attempts have conventionally been made to minimize the discontinuity of the change in stiffness, so that the stress concentration can be decreased. Specifically, the reinforcing layers were provided so that the end of the innermost reinforcing layer among a plurality of reinforcing layers was located lower than the end of the turnup portion, while the end of the outer reinforcing layer was located higher than the end of the turnup portion, i.e., the end of the innermost reinforcing layer does not overlap with the end of the outer reinforcing layer at the same position. Further, in order to enhance the reinforcing effect of the turnup portion, the modulus of the innermost reinforcing layer was made higher than the modulus of the outer reinforcing layer.

However, the diversification of applications of radial tires in recent years, particularly the use of radial tires under remarkably severe heavy-duty conditions has made it difficult to satisfactorily avoid the occurrence of rubber separation or crack which occurs at the bead portion by mere provision of the above-mentioned reinforcing structure.

A tire according to the preamble of claim 1 is known, e.g. from DE-A-2611482.

An object of the present invention is to eliminate the above-mentioned problems accompanying the conventional radial tires and to provide a heavy-duty pneumatic radial tire improved with respect to the durability of the bead portion.

Another object of the present invention is to provide a heavy-duty pneumatic radial tire having a carcass ply comprised of a metallic cord the end portion of which has been turned up about the bead core and at least two reinforcing layers provided on the outside of the turnup portion, which prevents the occurrence of a metallic cord from rubber separation mainly at the end of the turnup portion and the occurrence of the crack on the surface of the bead portion attributable to the rubber separation.

These objects are achieved by the features comprised in claim 1.

The radial tire of the present invention which attains the above-mentioned objects is substantially the same as the conventional tires in the construction of at least two reinforcing layers provided at the turnup portion of a carcass ply comprised of a metallic cord. Specifically, at least two reinforcing layers are provided on the outside of the turnup portion so that the end of the innermost reinforcing layer is located lower than the end of the turnup portion while the end of the outer reinforcing layer is located higher than the end of the turnup portion and that the modulus of a reinforcing cord constituting the innermost reinforcing layer is larger than the modulus of a reinforcing cord constituting the outer reinforcing layer. The provision of a plurality of reinforcing layers in the above-mentioned manner serves to make the change in stiffness in the laminated state gradual as much as possible, which contributes to the decrease in the stress concentration.

The radial tire of the present invention has a rubber stock provided on the inside of the outer reinforcing layer of the reinforcing layers having the above-mentioned structure so as to cover both the end of the turnup portion and the end of the innermost reinforcing layer. It is noted in this connection that the rubber stock contains a cobalt salt in an amount of 0.1 to 0.4 parts by weight per 100 parts by weight of rubber in terms of cobalt element and that the dynamic modulus $M_2$ of the rubber stock is larger than the dynamic modulus $M_1$ and is in the range from 10 to 15 MPa. Further, the rubber stock having the above-mentioned characteristics has a thickness d, defined as a distance from the inside surface of the outer reinforcing layer to the end of the turnup portion, 1.0 to 4.0 times larger than the diameter $r_2$ of the reinforcing cord constituting the innermost reinforcing layer.

The insertion of such a rubber stock into the bead portion suppresses the movement of the end of the turnup portion in rubber which occurs when the tire undergoes severe load, thereby suppressing the occurrence of separation thereof from the rubber. Further, the incorporation of the cobalt salt in the rubber stock improves the adhesion between the metallic cord and the rubber and can suppress the rubber separation attributable to the movement of the end of the turnup portion which tends to occur during vulcanization molding of a tire.

The term "dynamic modulus" of rubber used in the present invention is intended to mean dynamic modulus determined from the results of measurement conducted by a method in which a rubber sample is applied to measurement with a viscoelasticity spectrometer under the following conditions: a temperature of $20^\circ$ C; a strain of $10 \pm 2\%$; and a vibration load at 20 Hz.

Further, the term "modulus of electricity" of cord used in the present invention is intended to mean a modulus determined from the results of measurement conducted by a method in which a cord is pulled with a tensile machine until it is broken.

FIG. 1 is an enlarged partial vertical sectional view of the bead portion of the heavy-duty radial tire according to an example of the present invention;

FIG. 2 is a graph showing the relationship between the cobalt element content of a rubber stock and the amount of rubber bonded to a cord; and

FIG. 3 is a graph showing the relationship between the dynamic modulus of a rubber stock and the durability of a bead portion.

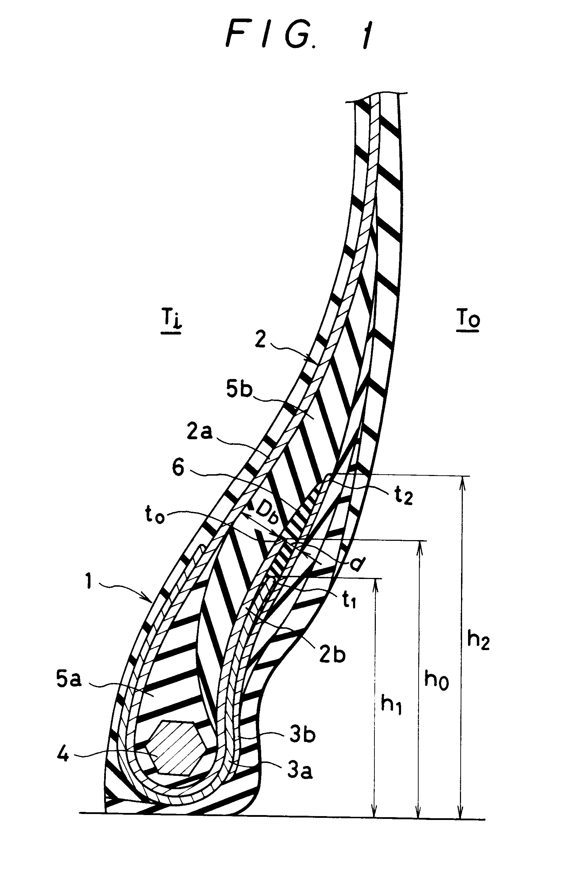

FIG. 1 shows a bead portion 1 of the heavy-duty radial tire according to the present invention. In FIG. 1, Ti designates the inside of a tire, while To designates the outside of the tire. Numeral 2 designates a carcass ply comprised of a metallic cord and provided at an angle of substantially $90^\circ$ relative to the circumferential direction of the tire. The carcass ply 2 has a main body portion 2a extending through a tread portion (not shown) to the bead portion located on the opposite site. A turnup portion 2b located at the end of the carcass ply 2 is turned up about a bead core 4 from the inside Ti of the tire towards the outside To of the tire. Bead rubber fillers 5a and 5b are interposed between the turnup portion 2b and the main body portion 2a. The bead rubber filler 5a directly surrounds a bead core 4 and extends upward. On the other hand, the bead rubber filler 5b follows the bead rubber filler 5a and extends upward.

These bead rubber fillers 5a and 5b are made of a hard rubber and preferably the dynamic modulus of the bead rubber filler 5a is larger than or the same as that of the bead rubber filler 5b. The dynamic modulus of the bead filler 5a is preferably in the range of from 12 to 16 MPa and that of the bead rubber filler 5 is preferably in the range of from 4 to 7 MPa.

The bead rubber filler 5b has a thickness Db defined as a distance from the main body portion 2a to the end $t_0$ of the turnup portion. In the radial tire of the present invention, it is preferred that the thickness Db be 4.5 to 12.0 times larger than the cord diameter $r_1$ of a cord constituting the carcass ply 2. When the metallic cord is lapped in a lap cord, the diameter of the cord mainly responsible for the cord tenacity, i.e., the diameter of the cord exclusive of the lap cord, is taken as the cord diameter. When the thickness Db of the bead rubber filler 5b is 4.5 times or more larger than the diameter $r_1$ of the metallic cord, not only the interlaminar shearing which occurs when the tire is under load can be suppressed to a small level, but also the growth of the rubber separation can be prevented even when the rubber separation occurs at the end of the turnup portion 2b. However, when the thickness Db is too large, i.e., 12.0 times or more larger than the diameter $r_1$ of the metal cord, the bead rubber filler 5b tends to accumulate heat, which promotes the rubber separation.

In this example, two reinforcing layers, i.e., reinforcing layers 3a and 3b, are provided on the outside of the turnup portion 2b. As mentioned above, the reinforcing layer is not limited to a two-layer structure and may be provided in three or more layers. Among these reinforcing layers, the innermost reinforcing layer 3a which has been provided so as to directly adjoin the turnup portion 2b is turned up so that it bestrides both the main body portion 2a and the turnup portion 2b of the carcass ply 2. Further, the outer reinforcing layer 3b is provided only at the outside of the tire and is not turned up to the main body portion 2a. In the provision of a plurality of reinforcing layers, the height $h_1$ of the end $t_1$ of the innermost reinforcing layer 3a from the bead base, the height $h_2$ of the end $t_2$ of the outer reinforcing layer 3b from the bead base, and the height $h_0$ of the end $t_0$ of the turnup portion 2b from the bead base satisfy the following relationship: $h_1 < h_0 < h_2$.

Further, the modulus of the reinforcing cord constituting the innermost reinforcing layer 3a is larger than that of the reinforcing cord constituting the outer reinforcing layer 3b. Making the modulus of the reinforcing cord constituting the innermost reinforcing layer 3a larger than that of the reinforcing cord constituting the outer reinforcing layer 3b enhances the reinforcing effect of the turnup portion 2b. To attain such an effect, the modulus of the reinforcing cord constituting the innermost reinforcing layer 3a is preferably in the range from 40,000 to 200,000 MPa, while the modulus of the reinforcing cord constituting the outer reinforcing layer 3b is preferably smaller than that of the innermost reinforcing layer 3a and is in the range from 1,000

to 20,000 MPa. The metallic cord constituting the carcass ply 2 which is reinforced by these reinforcing layers preferably has the modulus of 130,000 MPa. A metallic cord may be used as the reinforcing cord of the reinforcing layers 3a and 3b. Besides this, an organic fiber cord such as aramid fiber cord, polyester fiber cord, and nylon fiber cord can be also preferably used.

It is preferred that the reinforcing cords constituting the reinforcing layers 3a and 3b cross each other in the circumferential direction of the tire. The angle of the reinforcing cord is preferably in the range of from $\pm 15°$ to $\pm 50°$ relative to the circumferential direction of the tire.

In the radial tire of the present invention, a rubber stock 6 is inserted into the inside of the outer reinforcing layer 3b which has been provided in a manner as mentioned above so as to cover the end $t_1$ of the innermost reinforcing layer 3a and the end $t_0$ of the turnup portion 2b. The rubber stock 6 contains a cobalt salt in an amount of 0.1 to 0.4 parts by weight in terms of cobalt element. The dynamix modulus $M_2$ of the rubber stock is larger than the dynamic modulus $M_1$ of the coat rubber of the carcass ply 2 and is in the range of from 10 to 15 MPa. The dynamic modulus $M_1$ of the coat rubber is preferably in the range of from 4 to 10 MPa. Further, the rubber stock 6 has a thickness d defined as a distance from the inside surface of the reinforcing layer 3b to the end $t_0$ of the turnup portion 2b is 1.0 to 4.0 times larger than the diameter $r_2$ of the cord of the reinforcing cord constituting the innermost reinforcing layer 3a. It is to be noted in this connection that when the reinforcing cord is lapped in a lap cord, the diameter of the cord which is mainly responsible for the tenacity of the cord, i.e., the diameter of the cord exclusive of the lap cord, is taken as the diameter $r_2$ of the cord and is used for calculation of the ratio of the thickness of the rubber stock relative to the diameter of the cord.

As a result of observation of a cross-section of a tire after vulcanization and molding of it, the present inventor discovered that the metalic cord was exposed on the end $t_0$ of the turnup portion 2b because of its movement during the vulcanization and molding, whereby rubber separation was caused in the end $t_0$ of the turnup portion 2b when the tire rotated under a heavy load. However, the incorporation of a cobalt salt in the rubber stock 6 as mentioned above improves the adhesion between the rubber stock and the metallic cord, which can suppress the rubber separation.

According to the studies of the present inventor, in order to suppress the rubber separation, it is necessary that the amount of the rubber bonded to the metallic cord after vulcanization and molding be 90% or more. As mentioned above, in order to satisfy this requirement, it is required that the cobalt salt be incorporated in the rubber stock in an amount of 0.1 to 0.4 parts by weight per 100 parts by weight of rubber in terms of the cobalt element.

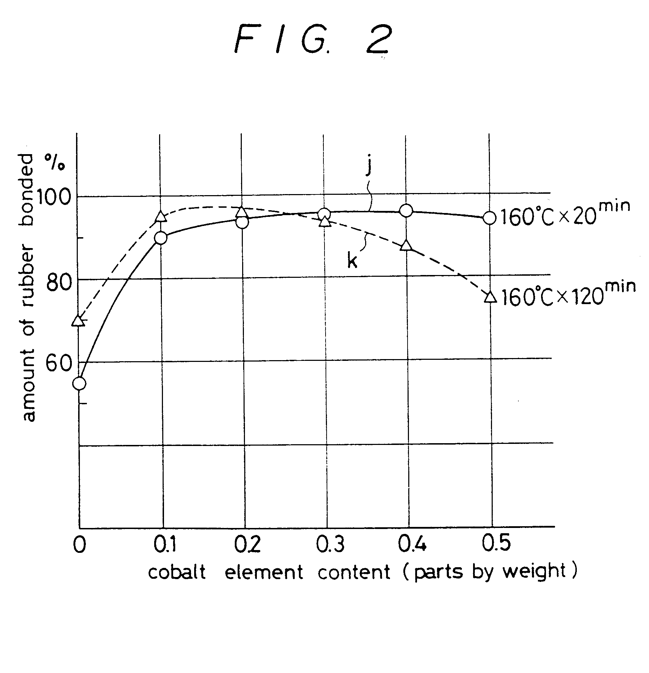

FIG. 2 is a graph showing the experimental results on the relationship between the content of cobalt element in the rubber stock and the amount of rubber bonded to the metallic cord. In the graph, a curve j shows the results on the case where generally employed vulcanization conditions ($160°$ C $\times$ 20 min) have been adopted, while a curve k shows the results on the case where overcure conditions ($160°$ C $\times$ 120 min) have been adopted. In both cases, the amount of rubber bonded is less than 90%, irrespective of either when the rubber stock is free from a cobalt salt or when the content of the cobalt salt, if any, is less than 0.1 parts by weight per 100 parts by weight of rubber in terms of cobalt element. On the other hand, when the content of the cobalt salt exceeds 0.4 parts by weight per 100 parts by weight of rubber in terms of cobalt element, the amount of the rubber bonded is lowered to 80% or less under overcure conditions ($160°$ C $\times$ 120 min), although no problem arises under generally employed vulcanization conditions ($160°$ C $\times$ 20 min). In FIG. 2, the amount of rubber bonded to the metallic cord was determined by pulling out a brass-plated steel cord having a 3 + 9 + 15 structure and embedded into rubber according to the method as described in ASTM D2229 and was expressed in terms of percentage rubber coating (%).

Further, when the dynamic modulus $M_2$ of the abovementioned rubber stock 6 is lower than the dynamic modulus $M_1$ of the coat rubber of the carcass ply 2 and is lower than 10 MPa, the movement of the end $t_0$ of the carcass ply 2 is increased when the tire is under load, which causes the stress concentration in the end $t_0$. This in turn promotes the rubber separation. However, when the dynamic modulus $M_2$ is too high and exceeds 15 MPa, an interlaminar separation is caused between the rubber stock and the bead rubber filler 5b, which makes it impossible to improve the durability of the bead portion. Therefore, in the present invention, it is required that the dynamic modulus $M_2$ of the rubber stock 6 be higher than the dynamic modulus $M_1$ of the coat rubber of the carcass ply 2 and in the range from 10 to 15 MPa.

Further, in the radial tire of the present invention, the thickness d of the rubber stock 6 should be 1.0 to 4.0 times larger than the cord diameter $r_2$ of the reinforcing cord constituting the innermost reinforcing layer 3a. When the thickness d is smaller than the cord diameter $r_2$, it is impossible to sufficiently relax the stress concentration in the end $t_0$ of the turnup portion 2b even where the dynamic modulus $M_2$ is in the range as mentioned above. On the other hand, when the thickness d is too large and is more than 4.0 times larger than the cord diameter $r_2$, there occurs a wave in the outer reinforcing layer 3b at the portion corresponding

4

EP 0 251 145 B1

to the end $t_0$ of the turnup portion 2b, which not only decreases the reinforcing effect but also promotes the rubber separation due to heat accumulation in the rubber stock 6.

Examples:

Twelve kinds of radial tires, i.e., tires B, C, D, E, F, G, H, I, J, K, L, and M, were prepared. These tires each had a size of l000 R20 and a bead structure as shown in FIG. l. They had the following various common factors but were different in the dynamic modulus Ml of the coat rubber of the carcass ply, the thickness d of the rubber stock, the dynamic modulus $M_2$ of the rubber stock, and the content of the cobalt salt of the rubber stock as shown in the Table. Among these tires, tires E, F, G, H, K, and L are the tires of the present invention, while tires B, C, D, I, J, and M are comparative tires.

Common Factors:

carcass ply (steel cord):

cord diameter $r_1$ = l.34 mm
modulus = l40,000 MPa
height of the end of the turnup portion $h_0$ = 70 mm

innermost reinforcing layer (steel cord):

cord diameter $r_2$ = 0.95 mm
modulus = l40,000 MPa
height of the end $h_1$ = 60 mm

outer reinforcing layer (nylon cord):
cord diameter = 0.7 mm
modulus = 2,750 MPa
height of the end $h_2$ = 88 mm

bead rubber filler (5b):

dynamic modulus = 6 MPa
thickness D = l0.5 mm ( = 7.84 $\times$ $r_1$ mm)

bead rubber filler (5a):

dynamic modulus = l5 MPa
Further, besides the above-mentioned twelve kinds of tires, a conventional tire A as shown in the Table was separately prepared. It has the above-mentioned common factors but is free from a rubber stock.
In order to evaluate the durability of the bead portion with respect to thirteen kinds of tires thus prepared, laboratory drum tests were conducted under the following conditions. In the tests, a running distance required for causing a crack of 5 mm or more in size on the surface of the bead portion which can be observed with the naked eye was determined.

test conditions:

air pressure = 9.0 kgf/cm$_2$
rim = 700T $\times$ 20
load = 200% of JIS standard load
speed = 50 km/h
room temperature = 30 $\pm$ 2$^\circ$ C
diameter of drum = l,700 mm

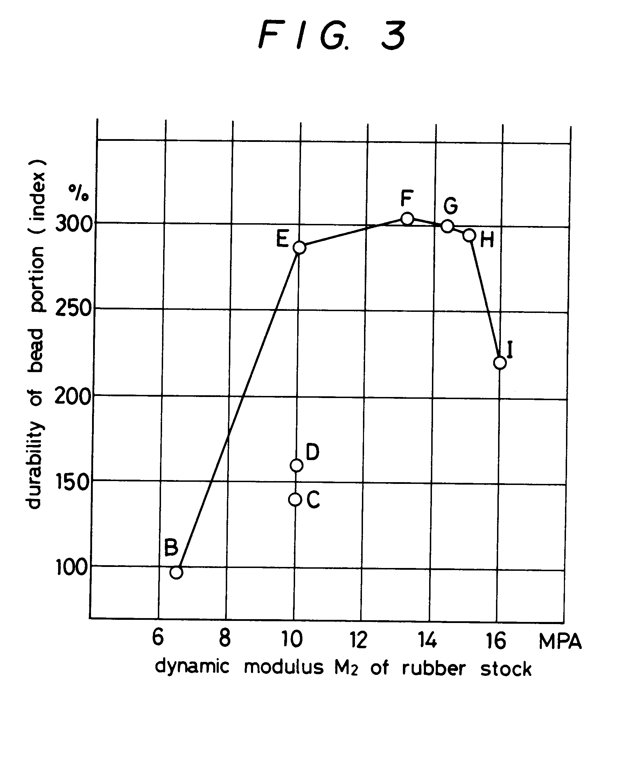

The durability of the bead portion of each tire thus determined was expressed in terms of an index by representing the running distance of the conventional tire A by l00. The results are shown in the Table. Further, the relationship between the durability index on each of the tires B, C, D, E, F, G, H, and I and the

5

dynamic modulus $M_2$ of rubber stock was graphically presented and are shown in FIG. 3.

Table

| Tires | Dynamic modulus $M_1$ of carcass coat rubber (MPa) | Rubber Stock | | | | Durability of bead portion (index) |
|---|---|---|---|---|---|---|
| | | Provision | $d/r_2$ | Dynamic modulus $M_2$ (MPa) | Cobalt element content (parts by weight per 100 parts by weight of rubber) | |
| A | 8.0 | no | - | - | - | 100 |
| B | 8.0 | yes | 2.63 | 6.5 | 0.0 | 98 |
| C | 8.0 | yes | 2.63 | 10.0 | 0.0 | 140 |
| D | 12.0 | yes | 2.63 | 10.0 | 0.1 | 160 |
| E | 8.0 | yes | 2.63 | 10.0 | 0.1 | 285 |
| F | 8.0 | yes | 2.63 | 12.7 | 0.2 | 304 |
| G | 8.0 | yes | 2.63 | 14.3 | 0.3 | 300 |
| H | 8.0 | yes | 2.63 | 14.8 | 0.4 | 295 |
| I | 8.0 | yes | 2.63 | 16.0 | 0.5 | 220 |
| J | 8.0 | yes | 0.8 | 12.7 | 0.2 | 185 |
| K | 8.0 | yes | 1.0 | 12.7 | 0.2 | 300 |
| L | 8.0 | yes | 4.0 | 12.7 | 0.2 | 280 |
| M | 8.0 | yes | 4.2 | 12.7 | 0.2 | 230 |

As can be seen from the above Table and FIG. 3, the tires E, F, G, H, K, and L according to the present invention had improved durability of the bead portion, i.e., had durability by 280% or more higher than the conventional tire A. On the other hand, the extent of improvement in durability of the bead portion in other comparative tires, i.e., tires B, C, D, I, J, and M, were smaller than that in the tires of the present invention.

Detailed description on this point will be given now. The comparative tire J in which the thickness of the rubber stock d is smaller than the diameter $r_2$ of the reinforcing cord constituting the innermost reinforcing layer is insufficient in relaxation of the stress concentration in the end of the turnup portion of the carcass ply, which leads to the rubber separation. Therefore, in this tire, any remarkable improvement in the durability of the bead portion cannot be attained. With respect to the comparative tire M in which the thickness d is 4.0 times or more larger than the diameter $r_2$ of the reinforcing cord, not only a wave is formed in the outer reinforcing layer at the portion corresponding to the end of the turnup portion but also the rubber stock accumulates heat, which promotes the rubber separation. With respect to the comparative tires B and D in which the dynamic modulus $M_2$ of the rubber stock is smaller than the dynamic modulus $M_1$ of the coat rubber of the carcass ply, the durability of the bead portion is poor because the relaxation of the stress concentration in the end of the turnup portion of the carcass ply is insufficient.

The comparative tires B and C which are free from any cobalt salt in the rubber stock is remarkably lower in durability of the bead portion than the tires containing a cobalt salt, even when the dynamic modulus $M_2$ of the rubber stock is higher than the dynamic modulus $M_1$ of the carcass ply as in the tire C. On the other hand, when the dynamic modulus $M_2$ of the rubber stock is lower than the dynamic modulus $M_1$ of the carcass ply, the durability of the bead portion is poor as in the comparative tire D, even when the rubber stock contains a cobalt salt. Further, when a cobalt salt is contained in the rubber stock but is too large in its amount, the improvement in the durability of the bead portion is unsatisfactory as can be seen in the comparative tire I.

As is apparent from the foregoing description, in the radial tire of the present invention, a rubber stock having the above-mentioned dynamic modulus and thickness is inserted into the inside of at least two reinforcing layers which have been provided to reinforce the turnup portion of the carcass ply, which prevents the rubber separation in the bead portion. Therefore, the radial tire of the present invention can remarkably improve the durability of the bead portion over the conventional tires. By virtue of this improvement, the radial tire of the present invention can exhibit an extremely excellent durability even when it is applied to heavy-duty vehicles which are used under remarkably severe conditions.

## Claims

1. A heavy-duty pneumatic radial tire having a radial structure comprised of a carcass ply (2) made of a metallic cord, a bead rubber filler (5a, 5b) interposed between a turnup portion (2b), formed by turning up the end of said carcass ply (2) about a bead core (4) from the inside of the tire towards the outside of the tire, and a main body portion (2a) of said carcass ply (2), and at least two reinforcing layers (3a, 3b) provided on the outside of said turnup portion (2b), the end ($t_1$) of the innermost reinforcing layer (3a) being located lower than the end ($t_0$) of said turnup portion (2b), the end ($t_2$) of the outer reinforcing layer (3b) being located higher than the end ($t_0$) of said turnup portion (2b), said innermost reinforcing layer (3a) being comprised of a reinforcing cord having the modulus of elasticity larger than a reinforcing cord constituting said outer reinforcing layer (3b), and a thickness d, defined as the distance from the inside surface of said outer reinforcing layer (3b) to the outside surface of the end of said turnup portion (2b), being larger than the diameter $r_2$ of the reinforcing cord constituting said innermost reinforcing layer (3a),

wherein a rubber stock (6) is provided in the inside of said outer reinforcing layer (3b) so as to cover the end ($t_0$) of said turnup portion (2b) and the end ($t_1$) of said innermost reinforcing layer (3a),

characterized in that

said rubber stock (6) is containing cobalt salt in an amount of 0.1 to 0.4 parts by weight per 100 parts by weight of rubber in terms of cobalt element and having the dynamic modulus $M_2$ higher than the dynamic modulus $M_1$ of coat rubber of said carcass ply (2) and in the range from 10 to 15 MPa, measured under a temperature of 20° C, a strain of 10 ± 2 % and a vibration load at 20 Hz, and said thickness d being 1.0 to 4.0 times larger than said diameter $r_2$,

wherein the thickness Db of said bead rubber filler (5b) defined as the distance from the inside surface of the main body portion (2a) of said carcass ply (2) to the outside surface of the end ($t_0$) of said turnup portion (2b) is 4.5 to 12.0 times larger than the diameter $r_1$ of the metallic cord constituting said carcass ply (2),

and wherein the dynamic modulus $M_1$ of the cord rubber of said carcass ply (2) is 4 to 10 MPa.

2. A heavy-duty pneumatic radial tire according to claim 1, wherein the reinforcing cord constituting said reinforcing layer (3a) is a metallic cord or an organic fiber cord.

3. A heavy-duty pneumatic radial tire according to claim 2, wherein the moduli of the reinforcing cord constituting said innermost reinforcing layer (3a), the reinforcing cord constituting said outer reinforcing layer (3b), and the metallic cord constituting said carcass ply (2) are 40,000 to 200,000 MPa, 1,000 to 20,000 MPa, and more than 130,000 MPa, respectively.

**Revendications**

1. Bandage radial pneumatique pour poids lourds du type possédant une structure radiale constituée par des plis de carcasse (2) réalisés avec un câble métallique, un rembourrage de garnissage en caoutchouc (5a, 5b) interposé entre une portion de rebroussement (2b) formée par le retournement de l'extrémité desdits plis de carcasse (2) autour d'un corps de rembourrage (4) depuis l'intérieur du bandage à l'encontre de l'extérieur du bandage, et une portion principale de corps (2a) de ladite carcasse de plis (2), et au moins deux couches de renforcement (3a, 3b) prévues sur l'extérieur de la portion de rebroussement (2b), l'extrémité ($t_1$) de la couche la plus interne de renforcement (3a) étant située en-dessous de l'extrémité ($t_0$) de ladite portion de rebroussement (2b), l'extrémité ($t_2$) de la couche externe de renforcement (3b) étant située plus haut que l'extrémité ($t_0$) de ladite portion de rebroussement (2b), ladite couche la plus interne de renforcement (3a) étant constituée par un câble de renforcement ayant un module d'élasticité plus important que celui d'un câble de renforcement constituant ladite couche externe de renforcement (3b), et une épaisseur d, définie comme étant la distance depuis la surface interne de ladite couche externe de renforcement (3b) jusqu'à la surface externe de l'extrémité de ladite portion de rebroussement (2b), qui est plus importante que le diamètre ($r_2$) du câble de renforcement qui constitue la couche de renforcement la plus interne (3a),

   dans lequel un talon en caoutchouc (6) est prévu à l'intérieur de ladite couche externe de renforcement (3b) de manière à recouvrir l'extrémité ($t_0$) de la portion de rebroussement (2b) et l'extrémité ($t_1$) de la couche la plus interne de renforcement (3a),

   caractérisé en ce que ledit talon en caoutchouc (6) contient un sel de cobalt dans une quantité entre 0,1 et 0,4 parties par unité de poids pour cent parties du poids de caoutchouc en termes d'éléments cobalt et ayant un module dynamique ($M_2$) supérieur au module dynamique ($M_1$) du revêtement caoutchouc de la carcasse à plis (2) et compris dans une gamme entre 10 et 15 MPa, mesuré à une température de 20 ° C, des charges à la tension de 10 ± 2% et aux vibrations de 20 Hz, et ladite épaisseur (d) étant de 1 à 4 fois plus importante que ledit diamètre (r2),

   dans laquelle l'épaisseur ($D_b$) dudit remplissage de rembourrage en caoutchouc (5b) défini comme la distance depuis la surface interne de la portion principale de corps (2a) de ladite carcasse à plis (2) jusqu'à la surface externe de l'extrémité ($t_0$) de la portion de rebroussement (2b) est de 4,5 à 12,0 fois plus importante que le diamètre ($r_1$) du câble métallique qui constitue la carcasse à plis (2),

   et dans lequel le module dynamique ($M_1$) du câble en caoutchouc de la carcasse à plis (2) est de 4 à 10 MPa.

2. Bandage radial pneumatique pour poids lourds selon la revendication 1, dans lequel le câble de renforcement qui constitue la couche de renforcement (3a) est un câble métallique ou un câble en fibre organique.

3. Bandage radial pneumatique pour poids lourds selon la revendication 2, dans lequel les modules du câble de renforcement qui constitue ladite couche la plus interne de renforcement (3a), du câble de renforcement qui constitue ladite couche externe de renforcement (3b) ainsi que du câble métallique qui constitue ladite carcasse à plis (2) sont de 40.000 à 200.000 MPa, 1.000 à 20.000 MPa, et plus de 130.000 MPa respectivement.

**Patentansprüche**

1. Schwerlastradialreifen mit einem radialen Aufbau, der aus einer Karkassenlage (2), welche aus einem metallischen Cord hergestellt ist, einem Wulstkissen (5a, 5b) aus Gummi, welches zwischen einem hochgewendeten Abschnitt (2b), der durch Hochwenden des Endes der Karkassenlage (2) um einen Wulstkern (4) herum von der Innenseite des Reifens her zur Außenseite hin gebildet ist, und einem Hauptabschnitt (2a) der Karkassenlage (2) angeordnet ist, und aus zumindest zwei Verstärkungsschichten (3a, 3b) besteht, die an der Außenseite des hochgewendeten Abschnittes (2b) vorgesehen sind, wobei das Ende ($t_1$) der am weitesten innen liegenden Verstärkungsschicht (3a) tiefer angeordnet ist als das Ende ($t_0$) des hochgewendeten Abschnittes (2b), das Ende ($t_2$) der äußeren Verstärkungsschicht (3b) höher als das Ende ($t_0$) des hochgewendeten Abschnittes (2b) angeordnet ist,die am weitesten innen liegende Verstärkungsschicht (3a) aus einem Verstärkungscord besteht, der einen Elastizitätsmodul hat, welcher größer ist als der des Verstärkungscordes, welcher die äußere Verstärkungsschicht (3b) bildet, die Dicke d, definiert als Abstand von der Innenfläche der äußeren Verstärkungsschicht (3b) bis zur Außenfläche des Endes des hochgewendeten Abschnittes (2b) größer ist als der Durchmesser ($r_2$) des Verstärkungscordes, welcher die am weitesten innen liegende Verstärkungsschicht (3a) bildet,

und wobei Gummimaterial (6) auf der Innenseite der äußeren Verstärkungsschicht (3b) vorgesehen ist, so daß es das Ende ($t_0$) des hochgewendeten Abschnittes (2b) und das Ende ($t_1$) der am weitesten innen liegenden Verstärkungsschicht (3a) abdeckt,

dadurch gekennzeichnet,

daß das Gummimaterial (6) ein Kobaltsalz enthält und zwar in einer Menge von 0,1 bis 0,4 Gewichtsteilen von elementarem Kobalt, auf 100 Gewichtsteile Gummi, und einen dynamischen Elastizitätsmodul ($M_2$) hat, der größer ist als der dynamische Elastizitätsmodul ($M_1$) des Deckgummis der Karkassenlage (2) und in dem Bereich von 10 bis 15 MPa liegt, gemessen bei einer Temperatur von 20˚C, einer Verformung von 10 ± 2 % und einer Vibrationsbelastung bei 20 Hz, und daß die Dicke (d) 1,0 bis 4,0 mal größer als der Durchmesser ($r_2$) ist,

wobei die Dicke ($D_b$) des Wulstkissens (5b) aus Gummi, definiert als der Abstand von der Innenfläche des Hauptabschnittes (2a) der Kafflassenlage (2) bis zur Außenfläche des Endes ($t_0$) des hochgewendeten Abschnittes (2b), 4,5 bis 12 mal größer ist als der Durchmesser ($r_1$) des metallischen Cordes, welcher die Karkassenschicht (2) bildet,

und wobei der dynamische Elastizitätsmodul ($M_1$) des Cordgummis der Karkassenschicht (2) 4 bis 10 MPa beträgt.

2. Schwerlastradialreifen nach Anspruch 1, wobei der Verstärkungscord, welcher die Verstäungsschicht (3a) bildet, ein metallischer Cord oder ein organischer Fasercord ist.

3. Schwertastradialreifen nach Anspruch 2, wobei die Elastizitätsmodule des Verstärkungscordes, welcher die am weitesten innen liegende Verstärkungsschicht (3a) bildet, des Verstärkungscordes, welcher die äußere Verstärkungsschicht (3b) bildet, und des metallischen Cordes, welcher die Karkassenschicht (2) bildet, 40 bis 200.000 MPa, 1.000 bis 20.000 MPa bzw. mehr als 130.000 MPa betragen.

# F I G. 1

# F I G. 2

# F I G. 3